# EUROPEAN PATENT APPLICATION

(11) **EP 4 509 394 A1**
(43) Date of publication of application: **19.02.2025**
(21) Application number: 23382844.1
(22) Date of filing: 13.08.2023
(51) Int. Cl.: B62K 21/12

(54) **BYCICLE FRONT ASSEMBLY**

(71) Applicant: ORBEA, S. COOP., 48269 Mallabia (BIZKAIA) (ES)
(72) Inventor: Escarihuela Alcoverro, Arnau, 48006 BILBAO (ES); Ortuondo Gorostiza-Goiza, Jon Ander, 48960 Galdakao (ES)
(74) Representative: Cueto, Sénida

(57) **Abstract**

The invention discloses a bicycle front assembly (1) comprising a stem (2) and a handlebar (3) joined one to the other, where: a front end of the stem (2) comprises a cavity where a rear face of a central portion (3c) of the handlebar (3) fits, the cavity comprising at least one connection orifice; and the rear face of the central portion (3c) of the handlebar (3) comprises at least a connection orifice, and a front face of the central portion of the handlebar (3) comprises an opening configured for allowing access to said orifice. Thereby, the stem (2) is connected to the handlebar (3) by means of at least a screw passing through the orifice of the handlebar (3) and threading into the orifice of the stem (2).

## Description

### Field of the invention

The present invention belongs to the field of bicycles, and more particularly to the design of the front assembly of a bicycle, where the front assembly mainly comprises the stem, the handlebar, and connection means therebetween.

A first aspect of the present invention is directed to a bicycle front assembly having a new joining system between stem and handlebar.

A second aspect of the present invention is directed to a particularly designed stem for the front assembly disclosed above.

A third aspect of the present invention is directed to a particularly designed handlebar for the front assembly disclosed above.

### State of the art

At the front, a bicycle has the "*front assembly*" disclosed herein. The front assembly is formed by the stem, the handlebar, and means for joining one to the other, conventionally a clamp.

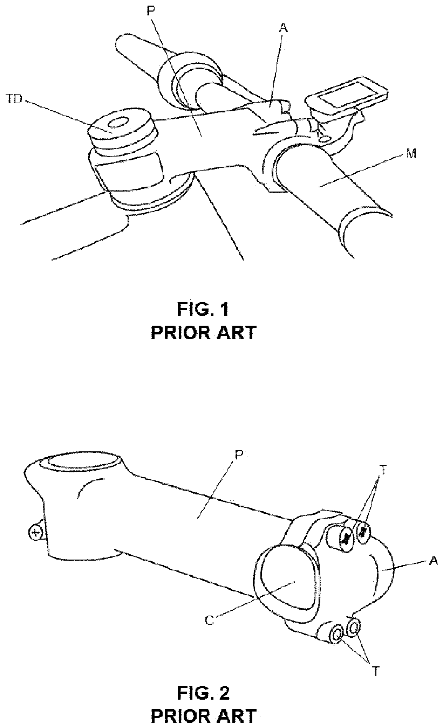

Now, these elements are disclosed in further detail with reference to Figs. 1 and 2:
Handlebar (M): Tube-shaped component at whose ends at least the grips, the brake levers and the gear shifters are provided. The shape of the tube cross section is normally circular, although elongated shapes such as ellipsoidal, ovoid or the like are also possible. The central portion of the handlebar (M) is connected to the stem (P) by means of a joining means (A), usually configured as a clamp. The handlebar (M) allows the cyclist to control the direction of the bicycle.
Stem (P): It is also a tube-shaped component, having frequently an elongated cross-section (elliptical, ovoid, square with rounded edges or the like), having a forward end connected to the central portion of the handlebar (M) and a rear end connected to the headset (TD). The headset (TD) typically belongs to the fork, to which, in turn, the front wheel is connected. This assembly allows the cyclist to control the bicycle by actuating the handlebar (M). The configuration of the stem (P) strongly influences the behaviour and control capacity of the bicycle.
Joining means (A): This element connects the front end of the stem (P) with the central portion of the handlebar (M). Conventionally a clamp (A) having a shape complementary to that of the handlebar (M) and having two pairs of orifices for screws (T) that fits against a complementary cavity (C) of the front end of the stem (P) also provided with two pairs of orifices is used. To carry out the connection, the central portion of the handlebar (M) is introduced into the cavity (C) of the front end of the stem (P), and the clamp (A) is fixed to the front end of the stem (P) by means of the four screws (T).

This configuration of the front assembly allows for the connection of the handlebar to the stem in a simple and, at the same time, sufficiently firm manner that is also easy to disassemble.

### Brief description of the invention

The inventors of the present invention have developed a modified front assembly with regards the joining between the handlebar and the stem. The new joining system is advantageous in that the front face of the central portion of the handlebar, that in the prior art system was covered by the clamp, is now free to be used for other purposes such as the provision of auxiliary elements, e.g., illumination means.

Another advantage of the joining system is related with a more refined aesthetic appearance, due to the elements used for the connection, such as screws and the like, being now hidden inside the handlebar tube. The front face of the central portion of the handlebar is thus free from auxiliary elements, and the assembly as a whole looks as though the handlebar and the stem were a single part.

In the present document, terms such as *"front', "rear", "upper", "lower"* and the like are interpreted taking into account the natural position of the bicycle when in use.

In the present document, the term *"tube"* refers to an element defined by displacing a closed curve (called generatrix) along a line (called directrix), where the generatrix is not necessarily circular. Thus, a tube may have a circular cross-section when the generatrix is a circle, or else an elongated cross-section when the generatrix is an elongated curve such as, e.g., an oval, an ellipse, an ellipsoid, or the like.

In the present document, the *"handlebar",* and more particularly its central portion, is supposed to be a tube-shaped element. As mentioned above, the cross-section of the handlebar may be circular or elongated.

In the present document, the term "face" referred to a tube-shaped component, such as the handlebar, refers to a lateral surface of said component having a cylindrical portion shape. The angular extension of a face need not necessarily be of 180°.

### First aspect: bicycle front assembly

A first aspect of the present invention is directed to a bicycle front assembly comprising a stem and a handlebar connected one to the other. Advantageously, in this front assembly the elements joining the stem to the handlebar are hidden inside the handlebar tube.

Thereto, a front end of the stem comprises a cavity, normally having a horizontal directrix, in which a rear face of a central portion of the handlebar fits. Since the central portion of the handlebar of a bicycle usually has a circular generatrix tube shape, the cavity of the stem is normally cylindrical. However, other shapes where the generatrix is not a circle but an elongated curve such and ellipsoid or the like, are possible. In any case, the angular extension of the cavity of the stem may have different values provided it provides a stable support for the handlebar tube. The angular extension of the cylindrical portion is preferably 180°, for example of between approximately 150° and 180°. An angular extension near to, although smaller than, 180° provides for an easy introduction of the handlebar tube and simultaneously a stable support.

The cavity also comprises at least a connection orifice allowing for the fixation of the handlebar. The orifice has an internal thread at least in part of its length for fixedly receiving a screw, as disclosed in further detail further down in the present document.

On the other hand, the rear face of the central portion of the handlebar comprises at least a connection orifice. The orifice in the rear face of the handlebar, naturally, is configured to match the connection orifice in the cavity of the stem when the handlebar abuts against the cavity in its natural mounting position. Further, for providing access to said orifice, a front face of the central portion of the handlebar comprises an opening.

Thanks to this configuration, the stem is connected to the handlebar by means of at least a screw passing through the orifice of the handlebar and threading into the orifice of the stem. Therefore, both the screw and the orifice are hidden from view inside the handlebar tube. Naturally, the number of orifices may be greater to increase the stability of the connection. For example, according to a particularly preferred embodiment of the invention, the cavity of the stem comprises two connection orifices and the rear face of the central portion of the handlebar comprises two connection orifices.

In principle, the screws may thread directly through both pairs of orifices without the need to use additional parts. However, preferably the front assembly of the invention comprises a support plate having two orifices through which the screws pass. The provision of this support plate dispenses with the need to provide two flat zones inside handlebar tube at the area where the screws abut, thereby making production of the handlebar tube easier and more standardized. Further, the support plate improves the load distribution and reduces the risk of deformations in any of both parts. The support plate may have any shape provided it encompasses the distance separating the two orifices, for example, a rectangular shape. Once the assembly is assembled, said support place is sandwiched between the screw heads and the rear face of the central portion of the handlebar.

The connection orifices could be provided in different positions, although in the preferred embodiment of the invention the two orifices of the stem and the two orifices of the handlebar are horizontally aligned, that is, aligned along the direction of the axis of the central portion of the handlebar tube. Horizontal alignment is advantageous because it is particularly stable and resistant having into account the loads acting on the connection during the life of the bicycle. Note that while the positions of the orifices are aligned in this direction, the screws may pass through the orifices of the handlebar tube and thread into the orifices of the stem in a direction contained in a horizontal plane or in an inclined plane depending on the needs.

The opening at the front face of the handlebar tube may in principle have any shape provided it allows access to the connection orifices provided at the front face. This access must allow for the installation of the screws and for screwing them during the assembly procedure, as well as the unscrewing and collection of the screws during the disassembly procedure. Although there are different options, in a particularly preferred embodiment of the invention the opening of the handlebar has a horizontally elongated shape with a length in the horizontal direction that is greater than the distance between the two orifices and also allowing for the introduction of the support plate.

Preferably, the handlebar opening and orifices are in a horizontally centred position of said handlebar, and the orifices of the cavity of the stem are also horizontally centred. In this context, the term *"centred"* is interpreted in connection with a vertical plane containing the bicycle when stem and handlebar are mounted.

In another preferred embodiment of the invention, a front portion of the stem comprises a widening such that the length in the horizontal direction (i.e., the width) of the cavity of the stem where the handlebar fits is larger than the length in the horizontal direction (i.e., the width) of the handlebar opening. That is, the distance between the lateral ends of the cavity where the handlebar fits is larger than the length in the horizontal direction of the handlebar opening. This provides for a support surface for the handlebar at the external lateral area of the opening, allowing for the handlebar loads to distribute also towards the stem, thereby causing it to provide structural support to the central portion of the handlebar where the opening at the front face and the orifices at the rear face have a negative effect in the rigidity and the resistant of the handlebar itself.

The configuration disclosed in the present invention, therefore, provides for a simple access to the inside of the handlebar tube by means of the opening. Once the assembly is assembled, the tube inner space can be used for the provision of auxiliary elements, or else it can simply remain empty.

For example, in a preferred embodiment of the invention, the front assembly further comprises an illumination means housed inside the handlebar opening for illuminating an area at the front of the bicycle. The illumination means may be, for example, a LED lamp having a battery. Preferably, a gasket may be provided for sealing the space between the illumination means and the edge of the handlebar opening. A compact, easily accessible and aesthetically agreeable illumination system is thereby obtained.

Alternatively, the front assembly may comprise an opaque lid closing the handlebar opening. In this configuration there is no illumination means. The inside of the handlebar opening may, in turn, be used to store spare parts or tools, or even remain empty.

In another preferred embodiment of the invention, the stem comprises an inner portion configured for coupling to an upper end of the headset. The coupling may be carried out in a conventional manner by means of friction elements. Alternatively, or complementarily, the coupling between stem and headset can be carried out by means of screws or the like. In any case, the stem preferably further comprises an upper opening having a lid for allowing access to the upper end of the headset.

According to another preferred embodiment, the front end of the stem further comprises orifices for the passage of cables. These orifices may be provided at a surface of the front end of the stem provided under the cavity where the handlebar fits.

Another preferred embodiment is directed to a bicycle comprising a forward assembly as disclosed above.

### Second aspect: stem for a forward assembly

A second aspect of the present invention is directed to a stem for a bicycle front assembly, where a front portion of the stem comprises a widening at whose front end a cavity shaped as a cylindrical portion configured for receiving a rear end of a central portion of the handlebar tube is provided. Said cavity comprises at least a connection orifice with said handlebar.

### Third aspect: handlebar for a forward assembly

A third aspect of the present invention is directed to a handlebar for a bicycle front assembly where a rear face of the central portion of the handlebar tube comprises at least a connection orifice. Furthermore, a front face of the central portion of the handlebar tube comprises an opening configured to allow access to said orifices and to house an illumination means.

### Brief description of the figures

The details of the invention are represented in the accompanying figures, which are not to be considered to limit the scope of the invention:
Fig. 1 shows a perspective view of a front assembly according to the prior art.
Fig. 2 shows a perspective view of a stem according to the prior art.
Fig. 3 shows a perspective view of a first example of front assembly according to the present invention.
Fig. 4 shows another perspective view of the first exemplary front assembly according to the invention.
Fig. 5 shows a perspective exploded view of the first exemplary front assembly according to the present invention.
Fig. 6 shows a horizontal cross-section of the first exemplary front assembly according to the present invention.
Fig. 7 shows a vertical cross-section of the first exemplary front assembly according to the present invention.
Fig. 8 shows a perspective view of a stem according to the present invention.
Fig. 9 shows a perspective view of a central portion of the handlebar according to the present invention.
Fig. 10 shows a front view of the handlebar positioned onto the cavity of the stem according to the present invention.
Fig. 11 shows a vertical cross-section of a second exemplary front assembly according to the present invention.
Fig. 12 shows another perspective view of a second exemplary front assembly according to the present invention.
Fig. 13 shows another perspective view of a support plate used in the front assembly according to the present invention.

### Detailed description of the invention

The invention is now disclosed with reference to the attached drawings.

The front assembly (1) of the invention comprises a stem (2) and a handlebar (3) joined one to the other.

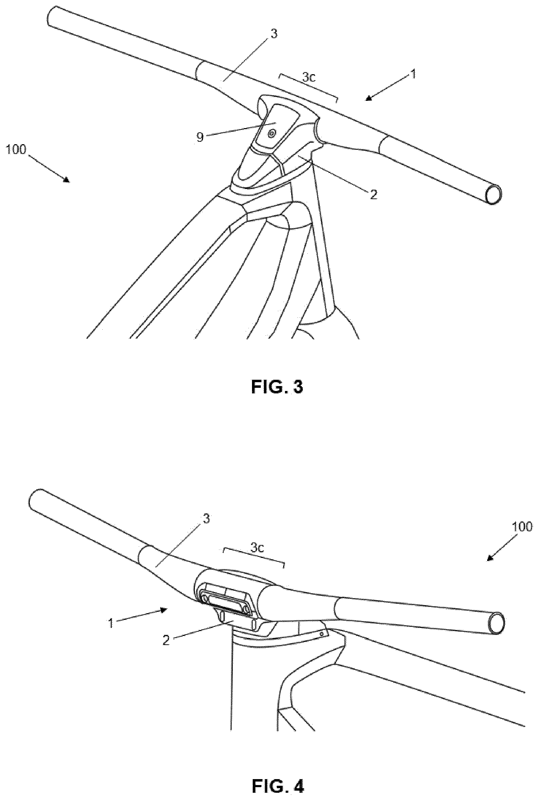

As clearly shown in Figs. 3 and 4, the handlebar (3) consists mainly of a circular cross-section tube that, in the present example, has an enlarged central portion (3c). That is, the central portion (3c) of the handlebar (3) has a circular cross-section whose diameter is larger than that of the circular cross-section at its ends.

At the rear face of said central portion (3c) of the handlebar (3), and centred with respect to the same, there are two joining orifices (32). The two orifices (32) are positioned in the direction of the axis of the cylinder making up the central portion (3c), that is, they are horizontally aligned when the handlebar (3) is mounted.

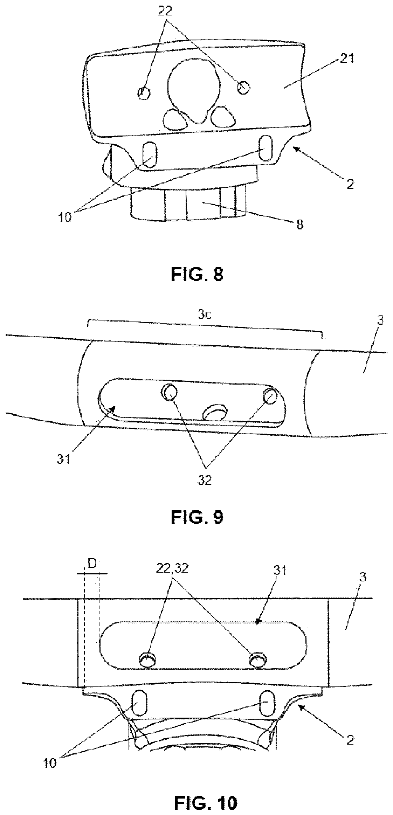

At the front face of the central portion (3c) of the handlebar (3) there is an opening (31). The opening (31) has an elongated shape also along the direction of the axis of the cylinder making up the central portion (3c). Therefore, the opening (31) is provided at the side of the handlebar (3) tube opposite the orifices (32). The width of the opening (31) is larger than the distance between the orifices (32), and its height is enough for the user to introduce his/her fingers or, at least, a screwdriver for installing the connection screws (T). Fig. 9 is a perspective view of the central portion (3c) of the handlebar (3) where the elements disclosed are shown.

On the other hand, Figs. 3 and 4 also show the stem (2) having a compact shape having a front end that is wider than the rear end. Thereto, the front portion widens frontwards, and at the front end there is a cavity (21) shaped as a cylindrical section oriented horizontally. The angular extension of the cylindrical section making up the cavity (21) in this example is of about 180°, that is, the cavity (21) has the shape of a semicylinder oriented in horizontal. As to the width (horizontal dimension of the cavity (21)), it is larger than the width of the opening (31). In the present example, the width difference is D. This is important in that the cavity (21) of the stem (2) thereby provides support to the handlebar (3) along a stretch that is longer than the length of the opening (31). This ensures the central portion (3c) of the handlebar (3), that is weakened by the opening (31) and the orifices (32), is subjected to a lower charge in comparison with when joined to a conventional stem having a narrower cavity (21). This ensures the resistance of the handlebar (3) throughout its useful life without the need to increase thickness too much.

The cavity (21) further comprises a pair of joining orifices (22) having an internal thread. The distance and position of these joining orifices (22) are selected for matching the position of the orifices (32) of the handlebar (3) when both components are provided at its mounting position. Fig. 8 shows a perspective view of the stem (2) where the above-disclosed elements are shown.

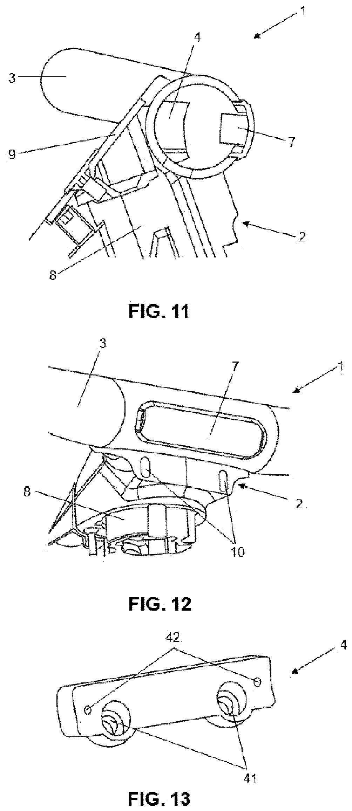

The front assembly (1) of the present example further comprises a support plate (4). The support plate (4), shown in detail in Fig. 13, is essentially rectangular with, at least, one of its main surfaces having a cylindrical shape. The support plate (4) further comprises two orifices (41) separated the same distance as orifices (22, 32) respectively of the stem (2) and handlebar (3). The support plate (4) further has another pair of orifices (42) provided near the ends and having a thread for the fixation of an illumination means (5) in the manner disclosed further down in the present document. The support plate (4) is designed to abut with its cylindrical face against the inner side of the rear face of the central portion (3c) of the handlebar (3), thus aligning its orifices (41) with the orifices (22, 32) of the stem (2) and handlebar (3).

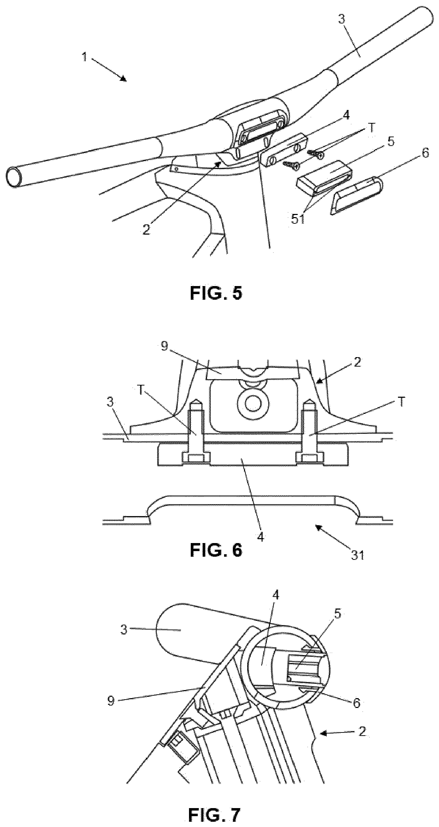

Thanks to this configuration, the handlebar (3) is fixed to the stem (2) in the following manner. First, the rear face of the central portion (3c) of the handlebar (3) abuts against the cavity (21), as shown in Fig. 10. The orifices (32) of the handlebar (3) are aligned with the orifices (22) of the cavity (21) of the stem (2). Next, having access to the above-disclosed orifices (22, 32) through the opening (31) of the handlebar (3), the support plate (4) is introduced and positioned abutting against the inner side of the rear face of the central portion (3c) of the handlebar (3), its orifices (41) being then aligned with the orifices (22, 32) of the stem (2) and handlebar (3). Two screws (T) are then introduced through the orifices (22, 32), and they are tightly screwed into the orifices (22) of the stem (2). The support plate (4) is thereby sandwiched between the head of the screws (T) and the rear face of the handlebar (3), distributing the charge and increasing the resistance, rigidity and strength of the connection. Figs. 5-7 show this connection in detail.

In the example shown in Figs. 5-7, an illumination means (5) is further installed inside the handlebar (3) tube. The illumination means (5) is introduced through the opening (31) in the handlebar (3), its front face being essentially flush with the front surface of the central portion (3c) of the handlebar (3). The illumination means (5) is fixed by means of two screws introduced through orifices (51) of said illumination means (5) and threaded into the orifices (42) provided near the ends of the support plate (4). A gap between the illumination means (5) and the edges of the opening (31) is sealed by means of a gasket (6). Thereby, an aesthetically attractive illumination system embedded in the handlebar (3) using the elements needed to connect the stem (2) to the handlebar (3) is provided.

Alternatively, as shown in Figs. 11-12, a lid (7) can be provided to close the opening (31) of the handlebar (3), thereby preventing the introduction of debris such as dust or mud.

The stem (2) shown in the examples illustrated in the figures may also have additional elements. For example, as shown in Fig. 8, the stem (2) may also have a lower portion (8) designed for connection to the upper end of the headset (see Figs. 8 and 12). This lower portion (8) may have friction elements for connection to the headset. Alternatively, or complementarily, the connection between stem (2) and headset may be carried out by means of other elements, such as screws or the like. In any case, the stem (2) shown in the exemplary figures includes a lid (9) provided at its upper portion for allowing access to said means for connection to the headset.

Furthermore, as shown in Figs. 8 and 10, in this example the stem (2) has a front end having a lower portion, that is, a portion below the cavity (21), having an essentially flat shape. This lower portion may have orifices (10) for passing cables forming part of other systems of the bicycle such as, for example, electrical cables, brake system cables or gear change cables.

## Claims

1. Bicycle front assembly (1), comprising a stem (2) and a handlebar (3) joined one to the other, **characterized in that:**
- a front end of the stem (2) comprises a cavity (21) in which a rear face of a central portion (3c) of the handlebar (3) fits, the cavity (21) comprising at least a connection orifice (22);
- the rear face of the central portion (3c) of the handlebar (3) comprises at least a connection orifice (32), and a front face of the central portion (3c) of the handlebar (3) comprises an opening (31) configured for allowing access to said orifices (32),
where the stem (2) is joined to the handlebar (3) by means of at least a screw (T) passing through the orifice (32) of the handlebar (3) and threading into the orifice (22) of the stem (2).

2. Front assembly (1) according to claim 1, where the cavity (21) of the stem (2) comprises two connection orifices (22) and the rear face of the central portion (3c) of the handlebar (3) comprises two connection orifices (32).

3. Front assembly (1) according to claim 2, further comprising a support plate (4) having two orifices (41) through which the screws (T) pass, said support plate (4) being sandwiched between the heads of the screws (T) and the rear face of the central portion (3c) of the handlebar (3).

4. Front assembly (1) according to any of claims 2-3, where the two orifices (22) of the stem (2) and the two orifices (32) of the handlebar (3) are horizontally aligned.

5. Front assembly (1) according to claim 4, where the opening (31) of the handlebar (3) has an elongated shape oriented in horizontal with a length in the horizontal direction that is larger than a distance between the two orifices (32) and further allowing for the introduction of the support plate (4).

6. Front assembly (1) according to claim 5, where the opening (31) and the orifices (32) of the handlebar (3) are in a horizontally centred position of said handlebar (3), and the orifices (22) of the cavity (21) of the stem (2) are also horizontally centred.

7. Front assembly (1) according to claim 6, where a front portion of the stem (2) comprises a widening such that the length in the horizontal direction of the cavity (21) of the stem (2) where the handlebar (3) fits is larger than the length in horizontal of the opening (31) of the handlebar (3).

8. Front assembly (1) according to any of the previous claims, further comprising an illumination means (5) provided inside the opening (31) of the handlebar (3) for illuminating an area in front of the bicycle.

9. Front assembly (1) according to claim 8, further comprising a gasket (6) configured to seal a gap between the illumination means (5) and the edges of the opening (31) of the handlebar (3).

10. Front assembly (1) according to any of claims 1-7, comprising an opaque lid (7) for closing the opening (31) in the handlebar (3).

11. Front assembly (1) according to any of the previous claims, where the stem (2) comprises a lower portion (8) configured to be coupled to an upper end of the headset.

12. Front assembly (1) according to claim 11, where the stem (2) further comprises an upper opening having a lid (9) configured for providing access to the upper end of the headset.

13. Bicycle (100) comprising a front assembly (1) according to any of the previous claims.

14. Stem (2) for a bicycle front assembly, **characterized in that** a front portion of said stem (2) comprises a widening at whose front end a cavity (21) is provided with a cylindrical portion shape configured for fitting a rear face of a central portion (3c) of the handlebar tube (3), the cavity (21) further comprising at least an orifice (22) for connection to said handlebar (3).

15. Handlebar (3) for a bicycle front assembly, **characterized in that** a rear face of a central portion (3c) of the handlebar tube (3) comprises at least a connection orifice (32), and a front face of the central portion (3c) of the handlebar tube (3) comprises an opening (31) configured for allowing access to said orifice (32) and for housing an illumination means (5).
